# EUROPEAN PATENT APPLICATION

(11) **EP 4 811 260 A1**
(43) Date of publication of application: **23.09.2026**
(21) Application number: 24890507.7
(22) Date of filing: 31.10.2024
(51) Int. Cl.: G06Q 30/0601

(54) **INFORMATION DISPLAY METHOD AND APPARATUS, DEVICE, AND STORAGE MEDIUM**

(30) Priority: 15.11.2023 CN 202311526436
(71) Applicant: Chengdu Guanghexinhao Technology Co., Ltd., Chengdu, Sichuan 610095 (CN)
(72) Inventor: SU, Min, Beijing 100028 (CN)
(74) Representative: Isarpatent
(86) International application number: PCT/CN2024/128923
(87) International publication number: WO 2025/103150

(57) **Abstract**

The present disclosure relates to the technical field of computers, and provides an information display method and apparatus, a device, and a storage medium. The method comprises: if a preset interaction event for a first candidate object meets a preset condition, using (101) the first candidate object as a target object; and in response to a page display instruction, displaying (102) a preset page, wherein target recommendation information is displayed in the preset page, the target recommendation information is determined on the basis of attribute information of the target object, the target recommendation information is used for triggering a preset interaction event for a second candidate object, and the second candidate object is associated with the target object.

## Description

### CROSS-REFERENCE TO RELATED APPLICATION(S)

The present application claims priority to Chinese Patent Application No. 202311526436.X, filed on November 15, 2023 and entitled "INFORMATION DISPLAY METHOD AND APPARATUS, DEVICE, AND STORAGE MEDIUM", the disclosure of which is incorporated herein by reference in its entirety.

### FIELD

Embodiments of the present disclosure relate to the field of computer technologies, and in particular to an information display method and apparatus, a device, and a storage medium.

### BACKGROUND

With the rapid development of information technology and the popularity of the mobile Internet, users can access a variety of resources through various Internet-related functions, such as various items, services, and virtual resources through online shopping functions, providing significant convenience for the users in all aspects of their life and work.

### SUMMARY

Embodiments of the present disclosure provide an information display method and apparatus, a device, and a storage medium, which can provide for optimization of existing information display solutions.

According to a first aspect, an embodiment of the present disclosure provides an information display method. The method includes:
in response to a preset interaction event for a first candidate object meeting a preset condition, using the first candidate object as a target object; and
displaying a preset page in response to a page display instruction, where target recommendation information is displayed on the preset page, the target recommendation information is determined based on attribute information of the target object, the target recommendation information is configured to trigger a preset interaction event for a second candidate object, and the second candidate object is associated with the target object.

According to a second aspect, an embodiment of the present disclosure further provides an information display apparatus. The apparatus includes:
a target object determination module configured to, in response to a preset interaction event for a first candidate object meeting a preset condition, use the first candidate object as a target object; and
an information display module configured to display a preset page in response to a page display instruction, where target recommendation information is displayed on the preset page, the target recommendation information is determined based on attribute information of the target object, the target recommendation information is configured to trigger a preset interaction event for a second candidate object, and the second candidate object is associated with the target object.

According to a third aspect, an embodiment of the present disclosure further provides an electronic device. The electronic device includes:
one or more processors; and
a storage means configured to store one or more programs, where
the one or more programs, when executed by the one or more processors, cause the one or more processors to implement the information display method according to the embodiments of the present disclosure.

According to a fourth aspect, an embodiment of the present disclosure further provides a storage medium containing computer-executable instructions, where the computer-executable instructions, when executed by a computer processor, are configured to perform the information display method according to the embodiments of the present disclosure.

### BRIEF DESCRIPTION OF THE DRAWINGS

The foregoing and other features, advantages, and aspects of embodiments of the present disclosure become more apparent with reference to the following specific implementations and accompanying drawings. Throughout the accompanying drawings, the same or similar reference numerals denote the same or similar elements. It should be understood that the accompanying drawings are schematic and that parts and elements are not necessarily drawn to scale.
FIG. 1 is a schematic flowchart of an information display method according to an embodiment of the present disclosure;
FIG. 2 is a schematic flowchart of another information display method according to an embodiment of the present disclosure;
FIG. 3 is a schematic diagram of an interface interaction according to an embodiment of the present disclosure;
FIG. 4 is a schematic diagram of another interface interaction according to an embodiment of the present disclosure;
FIG. 5 is a schematic diagram of still another interface interaction according to an embodiment of the present disclosure;
FIG. 6 is a schematic flowchart of still another information display method according to an embodiment of the present disclosure;
FIG. 7 is a schematic diagram of still another interface interaction according to an embodiment of the present disclosure;
FIG. 8 is a schematic diagram of still another interface interaction according to an embodiment of the present disclosure;
FIG. 9 is a schematic flowchart of still another information display method according to an embodiment of the present disclosure;
FIG. 10 is a schematic diagram of an interface according to an embodiment of the present disclosure;
FIG. 11 is a schematic diagram of still another interface according to an embodiment of the present disclosure;
FIG. 12 is a schematic structural diagram of an information display apparatus according to an embodiment of the present disclosure; and
FIG. 13 is a schematic structural diagram of an electronic device according to an embodiment of the present disclosure.

### DETAILED DESCRIPTION OF EMBODIMENTS

Embodiments of the present disclosure will be described in more detail below with reference to the drawings. Although some embodiments of the present disclosure are shown in the drawings, it should be understood that the present disclosure may be implemented in various forms and should not be construed as being limited to the embodiments set forth herein. Rather, these embodiments are provided for a more thorough and complete understanding of the present disclosure. It should be understood that the drawings and the embodiments of the present disclosure are only for exemplary purposes, and are not intended to limit the scope of protection of the present disclosure.

It should be understood that the various steps described in the method implementations of the present disclosure may be performed in different orders, and/or performed in parallel. Furthermore, additional steps may be included and/or the execution of the illustrated steps may be omitted in the method implementations. The scope of the present disclosure is not limited in this respect.

The term "include" and variants thereof used herein indicate open inclusion, that is, "include but are not limited to". The term "based on" is "at least partially based on". The term "an embodiment" means "at least one embodiment". The term "another embodiment" means "at least one another embodiment". The term "some embodiments" means "at least some embodiments". Related definitions of the other terms will be given in the description below.

It should be noted that concepts such as "first" and "second" mentioned in the present disclosure are only configured to distinguish different apparatuses, modules, or units, and are not configured to limit the sequence of functions performed by these apparatuses, modules, or units or interdependence.

It should be noted that the modifiers "one" and "a plurality of" mentioned in the present disclosure are illustrative and not restrictive, and those skilled in the art should understand that unless the context clearly indicates otherwise, the modifiers should be understood as "one or more".

The names of messages or information exchanged between a plurality of apparatuses in the implementations of the present disclosure are used for illustrative purposes only, and are not configured to limit the scope of these messages or information.

It can be understood that before the use of the technical solutions disclosed in the embodiments of the present disclosure, the user shall be informed of the type, range of use, use scenarios, etc., of personal information involved in the present disclosure in an appropriate manner in accordance with the relevant laws and regulations, and the authorization of the user shall be obtained.

In an information display solution according to the embodiments of the present disclosure, in response to a preset interaction event for a first candidate object meeting a preset condition, the first candidate object is used as a target object; and a preset page is displayed in response to a page display instruction, where target recommendation information is displayed on the preset page, the target recommendation information is determined based on attribute information of the target object, the target recommendation information is configured to trigger a preset interaction event for a second candidate object, and the second candidate object is associated with the target object. With the technical solution described above, if the preset interaction event for the first candidate object meets the preset condition, during the display of the preset page, the target recommendation information that is determined based on the attribute information of the first candidate object used as the target object and that is configured to trigger the preset interaction event for the second candidate object associated with the target object is displayed on the preset page, which facilitates the user in triggering the preset interaction event for the second candidate object based on the target recommendation information, thereby improving the efficiency of triggering the preset interaction event.

For example, in response to reception of an active request from the user, prompt information is sent to the user to clearly inform the user that a requested operation will require access to and use of the personal information of the user. As such, the user can independently choose, based on the prompt information, whether to provide the personal information to software or hardware, such as an electronic device, an application, a server, or a storage medium, that performs operations in the technical solutions of the present disclosure.

In an alternative but non-limiting implementation, in response to the reception of the active request from the user, the prompt information may be sent to the user in the form of, for example, a pop-up window, in which the prompt information may be presented in text. Furthermore, the pop-up window may further include a selection control for the user to choose whether to "agree" or "disagree" to provide the personal information to the electronic device.

It can be understood that the above-mentioned process of notifying and obtaining the authorization of the user is only illustrative and does not constitute a limitation on the implementations of the present disclosure, and other manners that satisfy the relevant laws and regulations may also be applied in the implementations of the present disclosure.

It can be understood that the data involved in the technical solutions (including, but not limited to, the data itself and the access to or use of the data) shall comply with the requirements of corresponding laws, regulations, and relevant provisions.

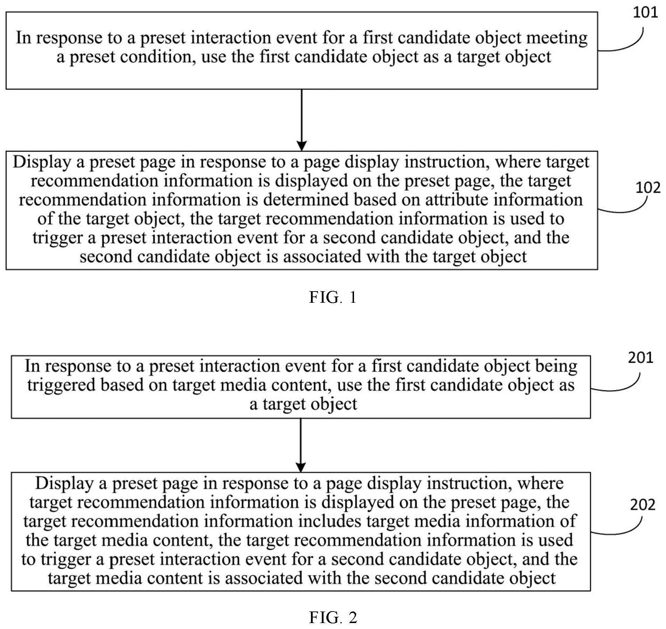

FIG. 1 is a schematic flowchart of an information display method according to an embodiment of the present disclosure. This embodiment of the present disclosure is applicable to a case of information display. The method may be performed by an information display apparatus. The apparatus may be implemented in the form of software and/or hardware, and optionally, by an electronic device. The electronic device may be a mobile terminal such as a mobile phone, a smart watch, a tablet computer, or a personal digital assistant, or may be a device such as a personal computer (PC) or a server.

As shown in FIG. 1, the method includes the following steps.

Step 101: In response to a preset interaction event for a first candidate object meeting a preset condition, the first candidate object is used as a target object.

In embodiments of the present disclosure, objects may include resources such as products, items, or services, and candidate objects may be specifically objects provided to a user in a preset application. The user can select a candidate object from numerous candidate objects to trigger the preset interaction event. The preset interaction event may be an interaction event that can be allowed for the candidate object, such as a purchase event or a reservation event. The first candidate object may be a candidate object for which the user currently triggers the preset interaction event. For example, if the user triggers a purchase for a product A, the product A is the first candidate object.

For example, the preset interaction event for the first candidate object meeting the preset condition may refer to completion of the preset interaction event for the first candidate object, such as completion of the purchase for the product A or successful purchase of the product A, specifically such as placing an order and making a successful payment. In the case where the preset interaction event for the first candidate object meets the preset condition, the first candidate object is used as the target object. As in the above-mentioned example, the target object is a candidate object successfully purchased by the user. Alternatively, the preset interaction event for the first candidate object meeting the preset condition may refer to the preset interaction event being triggered for the first candidate object in a preset scenario, such as in a media work display scenario, a live stream display scenario in a live streaming room, or a search scenario based on a search term.

For example, the preset application may have a media content display function, where media content may be associated with a candidate object. By displaying the media content associated with the candidate object, the candidate object is provided to the user, such that the user can trigger the preset interaction event for the candidate object based on the display of the media content. The media content may include a media work, which may include a picture work, a captioned picture work, a video work, etc. Alternatively, the media content may include a live stream. In this way, if the user, while viewing the media work or viewing a live stream, finds a candidate object of their interest in the current media work or the live stream, the user may trigger the preset interaction event for the candidate object. For example, the displayed media content may be associated with a preset interaction control for triggering the preset interaction event. The user may trigger the preset interaction event by triggering the preset interaction control, etc. For example, a purchase link for a product may be displayed on a media work display page or a live streaming page, and the user may tap the purchase link to enter a purchase page and input a purchase operation on the purchase page, thereby completing the purchase of the product.

For example, the preset application may have a search function for candidate objects. With this search function, the user can make an active search by inputting a search term, etc. Search results may include interaction links for triggering preset interaction events, and may further include media content associated with candidate objects, etc. The user may select therefrom a satisfactory search result, which is denoted as a target search result, and trigger the preset interaction event for the first candidate object by triggering an interaction link as the target search result or viewing media content in the target search result.

Step 102: A preset page is displayed in response to a page display instruction, where target recommendation information is displayed on the preset page, the target recommendation information is determined based on attribute information of the target object, the target recommendation information is configured to trigger a preset interaction event for a second candidate object, and the second candidate object is associated with the target object.

For example, the page display instruction may be generated based on a user operation, or may be generated automatically once the preset interaction event for the first candidate object meets the preset condition. Between determining the target object and displaying the preset page, pages other than the preset page may also be displayed, or user operations may be performed, which is not specifically limited. The preset page may be a page in the above-mentioned preset application. Before or while the preset page is displayed, other pages may further be displayed, such as an event-associated page of the preset interaction event (e.g., a purchase completion page), which is not specifically limited.

In the embodiments of the present disclosure, the target recommendation information is displayed on the preset page, where the recommendation information may include information that is displayed to the user and that can trigger a preset interaction event for a candidate object, such as media information of the media content or the search term as illustrated above, or may include an object unit of the candidate object (e.g., a product card), etc. The specific display form of the recommendation information is not limited. The target recommendation information is recommendation information determined based on the attribute information of the target object. The attribute information of the target object may include, for example, a category and a provision method of the target object, target media content associated with the target object, a search term associated with the target object (e.g., a search term by which the target object can be retrieved), etc. The target recommendation information is configured to trigger the preset interaction event for the second candidate object. The second candidate object is associated with the target object, and the specific association method is not limited. For example, a category of the second candidate object is the same as or similar to the category of the target object. For another example, the second candidate object and the target object are associated with the same media content. For still another example, the second candidate object is associated with a search result for a target recommended search term determined based on the attribute information of the target object.

In the information display method according to the embodiments of the present disclosure, in response to the preset interaction event for the first candidate object meeting the preset condition, the first candidate object is used as the target object; and the preset page is displayed in response to the page display instruction, where the target recommendation information is displayed on the preset page, the target recommendation information is determined based on the attribute information of the target object, the target recommendation information is configured to trigger the preset interaction event for the second candidate object, and the second candidate object is associated with the target object. With the technical solution described above, if the preset interaction event for the first candidate object meets the preset condition, during the display of the preset page, the target recommendation information that is determined based on the attribute information of the first candidate object used as the target object and that is configured to trigger the preset interaction event for the second candidate object associated with the target object is displayed on the preset page, which facilitates the user in triggering the preset interaction event for the second candidate object based on the target recommendation information, thereby improving the efficiency of triggering the preset interaction event.

In some embodiments, the attribute information of the target object includes the category of the target object. The second candidate object being associated with the target object includes: a similarity between a category of the second candidate object and the category of the target object meeting a preset similarity requirement, and/or a preset association relationship existing between the category of the second candidate object and the category of the target object, where the preset association relationship is determined based on historical interaction events. In this way, the target recommendation information configured to trigger a preset interaction event for a candidate object of an associated category can be recommended to the user based on the category of the target object.

For example, the category of the target object may be classified based on characteristics of the candidate objects. Taking the candidate objects as products or services as an example, the category of the target object may be specifically a product category (e.g., clothing, food, or group-buying vouchers) or a service category (e.g., catering services, delivery services, or home services). The preset similarity requirement may be, for example, having the same category. The preset association relationship may be a relationship determined based on the historical interaction events. The historical interaction events may be understood as preset interaction events that have ever occurred. For example, statistics on the triggering sequence and triggering intervals of historical interaction events for candidate objects of different categories may be compiled, and then based on statistical results, it may be determined whether the candidate objects of different categories meet the preset association relationship. If the triggering sequence is consecutive and the triggering interval is less than a preset interval threshold (e.g., 15 minutes, etc., which may be set according to actual needs), it may be determined that the preset association relationship is met. Of course, it is also possible to set other determination methods. For example, many users may purchase popcorn shortly after purchasing a movie ticket. Based on such historical interaction events, it can be determined that the movie ticket and the popcorn meet the preset association relationship. For another example, many users may purchase a beverage voucher shortly after purchasing a hotpot group-buying voucher. Based on such historical interaction events, it can be determined that the hotpot group-buying voucher and the beverage voucher meet the preset association relationship.

Optionally, a preset feed is displayed on the preset page, where the preset feed may include a plurality of pieces of preset information, and one or more pieces of preset information in the preset feed may be displayed together on the preset page. The preset feed includes the target recommendation information. Optionally, the preset information may further include other information, such as source information of the candidate object (e.g., store information), candidate object information (e.g., product information), or news information, which is not specifically limited. Optionally, the media content is associated with the candidate object. For example, the media content may include demonstration content of the candidate object, an image containing the candidate object, a real-time image containing the candidate object, etc. The media information of the media content may include an associated image of the media content or the media content itself. The associated image may be specifically a preview image of the media content, such as a cover image or a clip of a media work, or a video frame or a preview stream of a live stream. The media information of the media content may be associated with an interaction control for triggering the preset interaction event. Alternatively, display of the media content to which the media information belongs may be triggered by triggering the media information, and the media content is associated with the preset interaction control for triggering the preset interaction event. In this way, the media information can be configured to directly or indirectly trigger the preset interaction event for the candidate object.

For example, the display mode of the preset feed is not limited, which may be a single-column display mode, a double-column display mode, etc. In the single-column display mode, a browsing direction of the preset information in the preset feed may be a vertical direction, and in the double-column display mode, the browsing direction of the preset feed may include both a horizontal direction and a vertical direction.

FIG. 2 is a schematic flowchart of another information display method according to an embodiment of the present disclosure. This embodiment of the present disclosure is optimized based on optional solutions in the above-mentioned embodiments. Specifically, the method includes the following steps.

Step 201: If a preset interaction event for a first candidate object is triggered based on target media content, the first candidate object is used as a target object.

In the embodiments of the present disclosure, attribute information of the target object includes the target media content associated with the target object. For example, the preset interaction event is triggered based on the display of the target media content, that is, during the display of target preset media content, the user can trigger (or complete) the preset interaction event for the first candidate object based on the target preset media content. The target media content may include a target media work, and may further include a live stream of a target live streaming room.

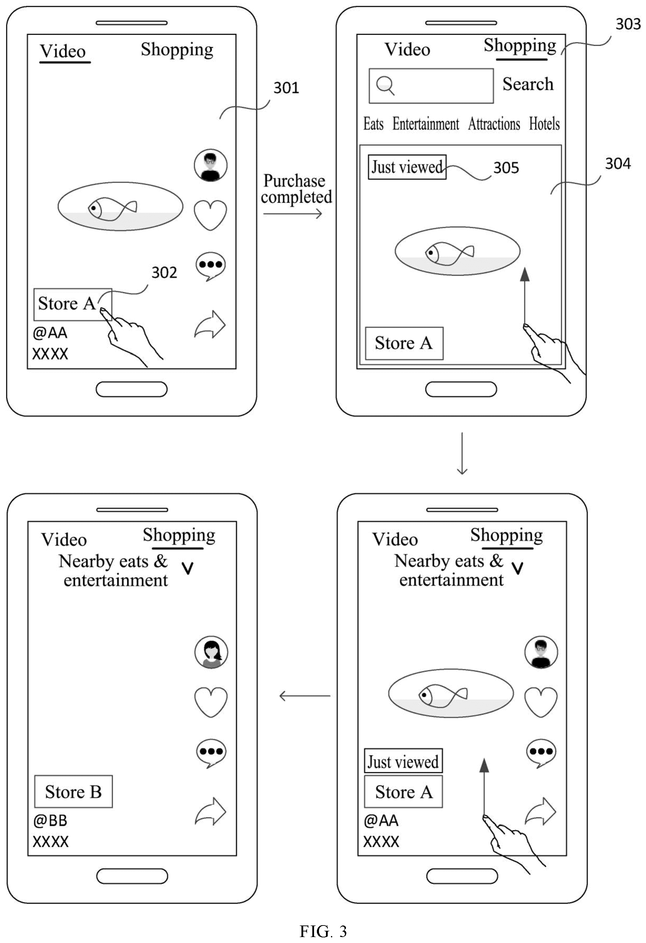

For example, an example in which the preset interaction event is a purchase event and the target media content is the target media work is used. FIG. 3 is a schematic diagram of an interface interaction according to an embodiment of the present disclosure. As shown in FIG. 3, first media content 301 is displayed on a media content display page. The first media content 301 may be specifically a video work introducing meal packages in a store A. The video work is associated with an interaction control 302 for triggering purchase of a meal package voucher. The user may trigger the interaction control 302 to purchase a group-buying voucher (the first candidate object) for a meal package a in the store A, that is, triggering the preset interaction event for the first candidate object. The process of triggering the purchase may further involve page redirection, payment, and other operations, which are not shown in the figure. After the purchase is completed, the group-buying voucher for the meal package a is determined as the target object.

Step 202: A preset page is displayed in response to a page display instruction, where target recommendation information is displayed on the preset page, the target recommendation information includes target media information of the target media content, the target recommendation information is configured to trigger a preset interaction event for a second candidate object, and the target media content is associated with the second candidate object.

For example, upon entry into the preset page, the target media information of the target media content is displayed on the preset page. Optionally, object recommendation information is further displayed on the preset page, and the target media information and the object recommendation information are displayed in a preset region of the preset page, where a display position of the target media information in the preset region is a preset display position. In this way, richer information can be displayed on the preset page, and displaying the target media information in the preset display position facilitates the user in quickly locating the target media information. The object recommendation information may be understood as information for recommending an object. The object recommendation information may be preset, or may be dynamically determined according to actual situations. The object recommendation information may be media information, specifically media information of preset media content. Optionally, the object recommendation information is associated with a preset candidate object.

Optionally, a preset feed is displayed on the preset page. The displayed preset feed includes the target media information and the object recommendation information. The preset region may be understood as a display region for the preset feed, and the preset display position may be the first display position in the preset feed. That is, the target media information is preferentially displayed over preset information other than the target media information in the preset feed. Optionally, before the preset page is displayed, a content identifier (e.g., a video id) of the target preset media content may be obtained, and the corresponding target media information may be obtained based on the content identifier and displayed in the preset display position.

As shown in FIG. 3, after the group-buying voucher for the meal package a is determined as the target object, the page display instruction may be automatically generated, to display a preset page 303 in response to the page display instruction. Assuming that the display mode of the preset feed is a single-column display mode, upon entry into the preset page 303, target media information 304 in the preset feed may be preferentially displayed, and switching of media information in the preset feed may be implemented by a swipe operation, etc.

Optionally, preset prompt information may be displayed in the target media information, where the preset prompt information is configured to indicate that the preset interaction event for the first candidate object is triggered based on the target media content to which the target media information belongs. The preset prompt information may be displayed in the form of text, label(s), icon(s), or control(s), which is not specifically limited. As shown in FIG. 3, preset prompt information 305 for the target media content is displayed in the target media information 304, where the specific content of the preset prompt information may be "Just viewed". After viewing the target media information 304, the user can clearly know that the target media information currently being displayed belongs to the video work that they just viewed when purchasing the group-buying voucher for the meal package a. Then, the user may continue to trigger the purchase of a group-buying voucher for the meal package a or a meal package b in the store A through the target media information 304, without having to go through complex operational paths, such as multiple return operations, to find the video work that they just viewed, thereby improving the operational efficiency. Optionally, upon entry into the preset page 303, item category options are further displayed on the preset page 303, such as Eats, Entertainment, Attractions, and Hotels as shown in the figure, and a search input region may further be displayed thereon. The target media information 304 is displayed in a first page region. When the user inputs a preset operation such as swipe-up, the target media information 304 is displayed in a second page region. The size of the second page region is greater than the size of the first page region.

For example, if the user does not currently need to trigger the preset interaction event based on the display of the target media content, the user may continue to switch to displaying a next piece of preset information in the preset feed, such as the object recommendation information, by inputting a set operation such as swipe-up.

In the information display method according to this embodiment of the present disclosure, after the user triggers the preset interaction event for the first candidate object in a scenario of displaying the target media content, the preset page is displayed, the corresponding target media information is displayed in the preset display position of the preset page, with the target media information used as the target recommendation information. This facilitates the user in triggering the preset interaction event for the associated second candidate object in the target media content by triggering the target recommendation information, thereby improving the efficiency of triggering the preset interaction event.

In some embodiments, the method further includes: displaying the target media information in a first preset display style on the preset page; and displaying the object recommendation information in a second preset display style on the preset page, where the second preset display style is different from the first preset display style. In this way, the target media information and the object recommendation information are displayed separately in different preset display styles, which can help the user locate the target media information more quickly.

For example, the second preset display style may be a default display style for target information (which may be the object recommendation information or the target media information, or may be the media information in the preset feed) on the preset page, and the first preset display style may be a display style that is different from the default display style and is configured to emphasize the target media information. Alternatively, the first preset display style may be a default display style for target information on the preset page, and the second preset display style may be a display style that is different from the default display style and is configured to de-emphasize the object recommendation information.

In some embodiments, after displaying the target media information in the first preset display style on the preset page, the method further includes: in response to a first preset condition being met, switching from displaying the target media information in the first preset display style on the preset page to displaying the target media information in the second display style on the preset page. In this way, the display style of the target media information can be switched flexibly. The first preset condition may be set based on an automatic trigger condition, for example, automatic switching after a preset duration (e.g., n seconds). Alternatively, the first preset condition may be set based on an active trigger condition of the user, such as the user's active input of a preset switching operation, such as a swipe-up operation or a tap operation.

In some embodiments, after displaying the object recommendation information in the second preset display style on the preset page, the method further includes: in response to a second preset condition being met, switching from displaying the object recommendation information in the second preset display style on the preset page to displaying the object recommendation information in the first display style on the preset page. The second preset condition may be set based on an automatic trigger condition, for example, automatic switching after a preset duration (e.g., n seconds). Alternatively, the second preset condition may be set based on an active trigger condition of the user, such as the user's active input of a preset switching operation, such as a swipe-up operation or a tap operation.

Optionally, the second preset display style being different from the first preset display style includes: no semi-transparent layer being overlaid on target information displayed in the first preset display style, while a semi-transparent layer being overlaid on target information displayed in the second preset display style. Optionally, the second preset condition may be having received a trigger operation of the user for the semi-transparent layer. The trigger operation may be, for example, a tap operation.

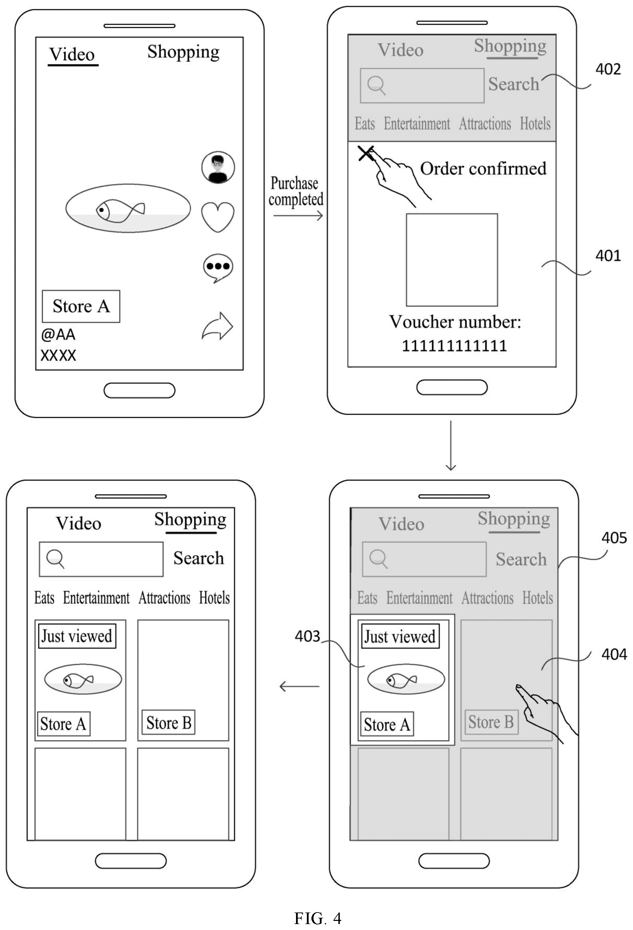

FIG. 4 is a schematic diagram of another interface interaction according to an embodiment of the present disclosure. As shown in FIG. 4, the target media content is displayed on the media content display page. After the user completes a purchase, an event-associated page 401 (e.g., an event completion page, specifically a purchase completion page) and a preset page 402 may be displayed. The event-associated page 401 is located above the preset page 402, and the size of the event-associated page 401 is less than the size of the preset page 402. After the event-associated page 401 is closed, page content on the preset page 402 that is occluded by the event-associated page 401 can be viewed. On the preset page 402, target media information 403 is displayed in the first preset display style, and object recommendation information 404 is displayed in the second preset display style, with a semi-transparent layer 405 being overlaid on the object recommendation information 404. Once the user taps the semi-transparent layer 405, the display of the semi-transparent layer 405 is canceled, such that no semi-transparent layer is overlaid on the object recommendation information 404.

In some embodiments, the second preset display style being different from the first preset display style includes: a display size of the target information displayed in the first preset display style being greater than a display size of the target information displayed in the second preset display style.

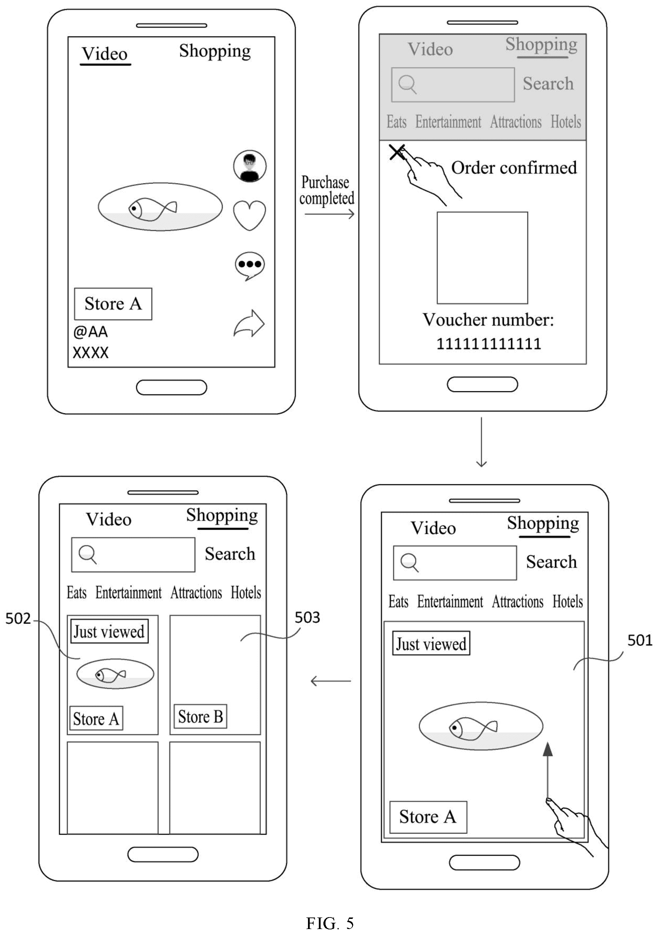

FIG. 5 is a schematic diagram of still another interface interaction according to an embodiment of the present disclosure. As shown in FIG. 5, the target media content is displayed on the media content display page. After the user completes a purchase, the event completion page and the preset page may be displayed. On the preset page, target media information 501 is displayed in the first preset display style, and object recommendation information (not shown in the figure) is displayed in the second preset display style. The display size of the target media information 501 is greater than the display size of the object recommendation information. After the user inputs a set operation such as swipe-up, the target media information 501 displayed in the first preset display style on the preset page is switched to target media information 502 displayed in the second display style on the preset page. It can be seen that at this time, the target media information 502 and object recommendation information 503 have the same display size.

In some embodiments, the second preset display style being different from the first preset display style includes: the target information displayed in the first preset display style containing an object identifier of a candidate object (such as the second candidate object) associated with the media content to which the target information belongs, while the media information displayed in the second preset display style containing no object identifier of the candidate object (such as the second candidate object) associated with the media content to which the target information belongs, where the object identifier is configured to trigger display of an object details page of the candidate object (e.g., the second candidate object) to which the object identifier belongs. This can facilitate the user in quickly entering the object details page, thereby further improving the efficiency of triggering the preset interaction event.

For example, for the target media information displayed in the first preset display style, the target media information may include the object identifier of the candidate object associated with the target media content. The associated candidate object may include the second candidate object, and may further include a candidate object different from the second candidate object, which is denoted as a third candidate object, for example. The target media information may contain one or more object identifiers. Using an example in which the target media content is a live stream of a target live streaming room, the second candidate object is a candidate object that is being demonstrated in the target live streaming room, and the third candidate object is a candidate object different from the second candidate object in a set of candidate objects associated with the target live streaming room. A streamer in the target live streaming room may demonstrate a plurality of products. The first candidate object is one of the products, such as a product a. The object identifier contained in the target media information may be an object identifier of the product a, or may be an object identifier of a product b that is currently being demonstrated by the streamer, or may even be an object identifier of a product c with a preset sequence number (e.g., the first one) in a list of products (the set of candidate objects) in the target live streaming room, where the product b and the product c may each be the second candidate object. Triggering the object identifier allows the user to enter the object details page, such as a product details page, of the candidate object to which the triggered object identifier belongs, thereby facilitating the user's subsequent purchase operations.

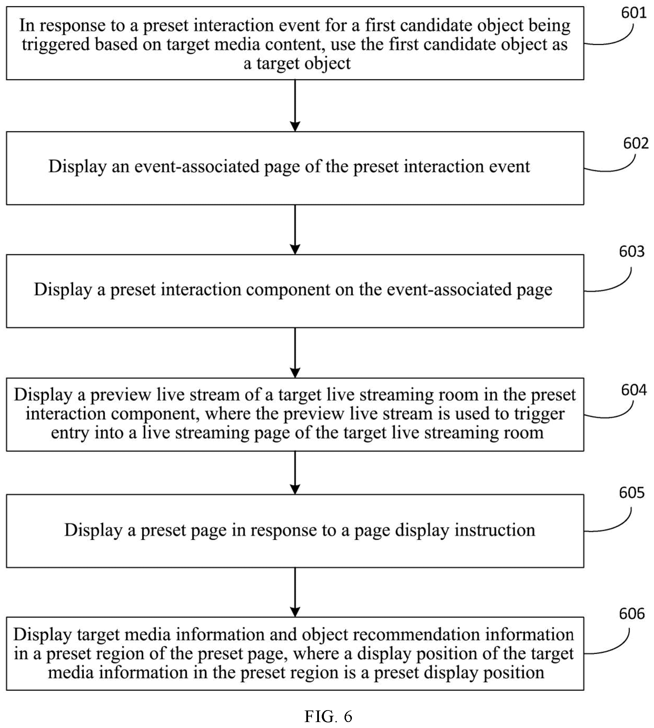

FIG. 6 is a schematic flowchart of still another information display method according to an embodiment of the present disclosure. This embodiment of the present disclosure is optimized based on optional solutions in the above-mentioned embodiments. Specifically, the method includes the following steps.

Step 601: If a preset interaction event for a first candidate object is triggered based on target media content, the first candidate object is used as a target object.

The target media content includes a live stream of a target live streaming room.

Step 602: An event-associated page of the preset interaction event is displayed.

Optionally, the event-associated page is located above the preset page, that is, the preset page is in an occluded state at this time.

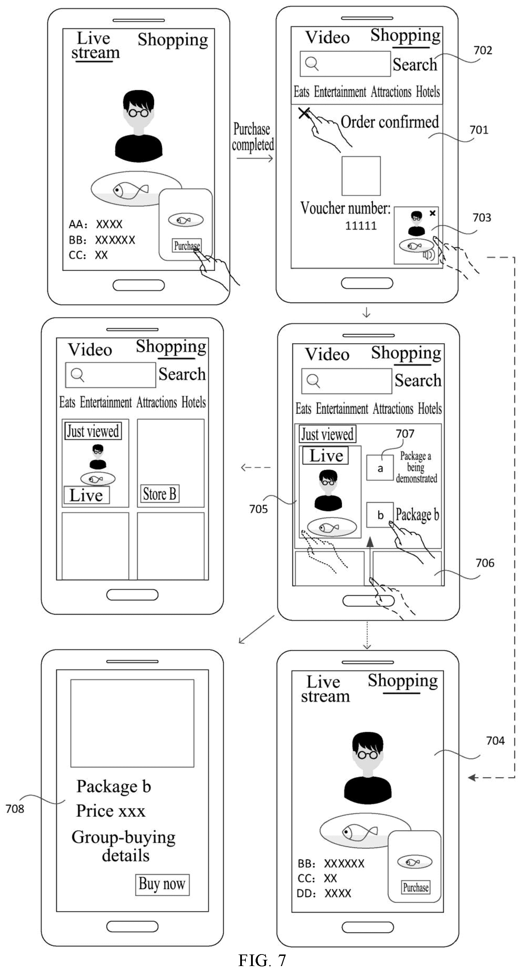

FIG. 7 is a schematic diagram of still another interface interaction according to an embodiment of the present disclosure. As shown in FIG. 7, while viewing the live stream of the target live streaming room, the user may purchase the first candidate object that is being demonstrated in the target live streaming room. After the purchase is completed, an event-associated page 701 and a preset page 702 that is in an occluded state are displayed. The page size of the event-associated page 701 is less than the page size of the preset page 702, and the event-associated page 701 is located above the preset page 702.

Step 603: A preset interaction component is displayed on the event-associated page.

As shown in FIG. 7, a preset interaction component 703 is displayed on the event-associated page 701.

Step 604: A preview live stream of the target live streaming room is displayed in the preset interaction component, where the preview live stream is configured to trigger entry into a live streaming page of the target live streaming room.

As shown in FIG. 7, the preview live stream of the target live streaming room is displayed in the preset interaction component 703. When the user triggers the preview live stream displayed in the preset interaction component 703 by tapping or in other manners, the user can enter the live streaming page 704 of the target live streaming room. This can facilitate the user in quickly returning to the target live streaming room, thereby further improving the efficiency of triggering the preset interaction event.

Optionally, an object identifier of a second candidate object associated with the live stream of the target live streaming room may be displayed in the preset interaction component, where the object identifier is configured to trigger display of an object details page of the candidate object to which the object identifier belongs. Alternatively, the preview live stream of the target live streaming room and the object identifier of the candidate object associated with the live stream of the target live streaming room are displayed in the preset interaction component. For example, the object identifier of the second candidate object associated with the live stream of the target live streaming room and/or an object identifier of a third candidate object associated with the target live streaming room are displayed. The second candidate object is a candidate object that is being demonstrated in the target live streaming room, and the third candidate object is a candidate object different from the second candidate object in a set of candidate objects associated with the target live streaming room. For example, the set of candidate objects may be specifically a list of products associated with the target live streaming room. Optionally, the displayed content in the preset interaction component may be switched based on user operations. For example, when the preview live stream of the target live streaming room and the object identifier of the second candidate object associated with the live stream of the target live streaming room are displayed in the preset interaction component, in response to a preset operation, switching from displaying in the preset interaction component the preview live stream of the target live streaming room and the object identifier of the second candidate object associated with the live stream of the target live streaming room to displaying the preview live stream of the target live streaming room in the preset interaction component is performed. Optionally, the method may further include: in response to a preset target operation, adjusting the size of the event-associated page to be the same as the size of the preset page, which means that the event-associated page completely covers the preset page at this time.

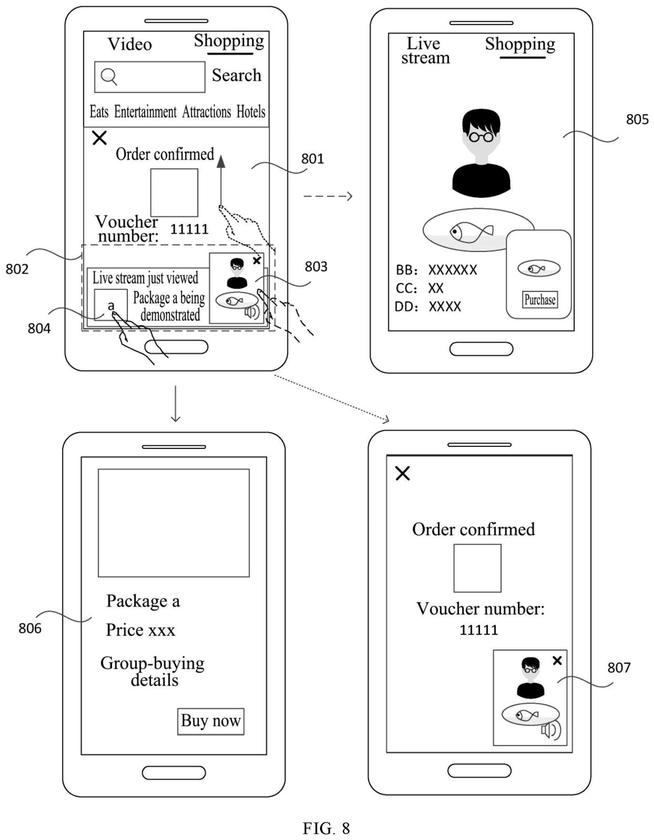

FIG. 8 is a schematic diagram of still another interface interaction according to an embodiment of the present disclosure. As shown in FIG. 8, a preset interaction component 802 is displayed on an event-associated page 801, and a preview live stream 803 of the target live streaming room and an object identifier 804 of the candidate object associated with the live stream of the target live streaming room are displayed in the preset interaction component 802. The object identifier may be specifically an object icon, such as a product cover image. When the user taps the preview live stream in the preset interaction component 802, it may trigger entry into a live streaming page 805 of the target live streaming room. When the user taps the object identifier 804, it may trigger entry into an object details page 806 of the candidate object to which the object identifier 804 belongs. Optionally, assuming that the user inputs a swipe-up operation (the preset operation) in the first interface in FIG. 8, the displayed content in the preset interaction component 802 may be switched to the preview live stream for display, while the display of the object identifier 804 can be canceled, and the sizes of the preset interaction component 802 and the event-associated page 801 may be adapted accordingly, resulting in a new preset interaction component 807 (which may be in the form of a small live streaming window) and an event-associated page displayed in full screen.

Step 605: The preset page is displayed in response to a page display instruction.

For example, when the user inputs a closing operation for the event-associated page, the page display instruction for fully displaying the preset page is generated to display the preset page that is in an un-occluded state.

Step 606: Target media information and object recommendation information are displayed in a preset region of the preset page, where a display position of the target media information in the preset region is a preset display position.

Optionally, the target media information is displayed in a preset display region of the preset page. The preset display region includes a first display region and a second display region. The first display region is configured to display the preview live stream of the target live streaming room. The second display region is configured to display the object identifier of the second candidate object associated with the live stream of the target live streaming room and/or the object identifier of the third candidate object associated with the target live streaming room. The third candidate object may be a candidate object different from the second candidate object.

As shown in FIG. 7, the display size of the target media information 705 displayed in a first preset display style is greater than the display size of the object recommendation information 706 displayed in a second preset display style. In addition, in the preset display region where the target media information 705 is located, the first display region is configured to display the preview live stream of the target live streaming room, and the second display region is configured to display an object identifier 707 of the second candidate object associated with the live stream of the target live streaming room, such as an object identifier of a package b and an object identifier of a package a that is being demonstrated as shown in FIG. 7, where the package b may be, for example, the first product in the list of products in the target live streaming room. When the user taps the object identifier of the package b, it may trigger entry into an object details page 708 of the package b. When the user taps the preview live stream of the target live streaming room, the user enters the live streaming page 704 of the target live streaming room. When the user inputs a swipe-up operation, a first preset condition is met, and switching from displaying the target media information in the first preset display style on the preset page to displaying the target media information in the second display style on the preset page is performed.

In the information display method according to this embodiment of the present disclosure, once the user triggers the preset interaction event for the first candidate object in the live streaming scenario, the event-associated page and the preset page that are overlaid are displayed. On the event-associated page, the preview live stream of the target live streaming room that the user just viewed is displayed to allow the user to quickly return to the live streaming room. Once the event-associated page is closed, the target media information corresponding to the target live streaming room is displayed in the preset display position of the preset page, so as to prompt the user to trigger the preset interaction event through the live streaming scenario again, thereby improving the efficiency of triggering the preset interaction event.

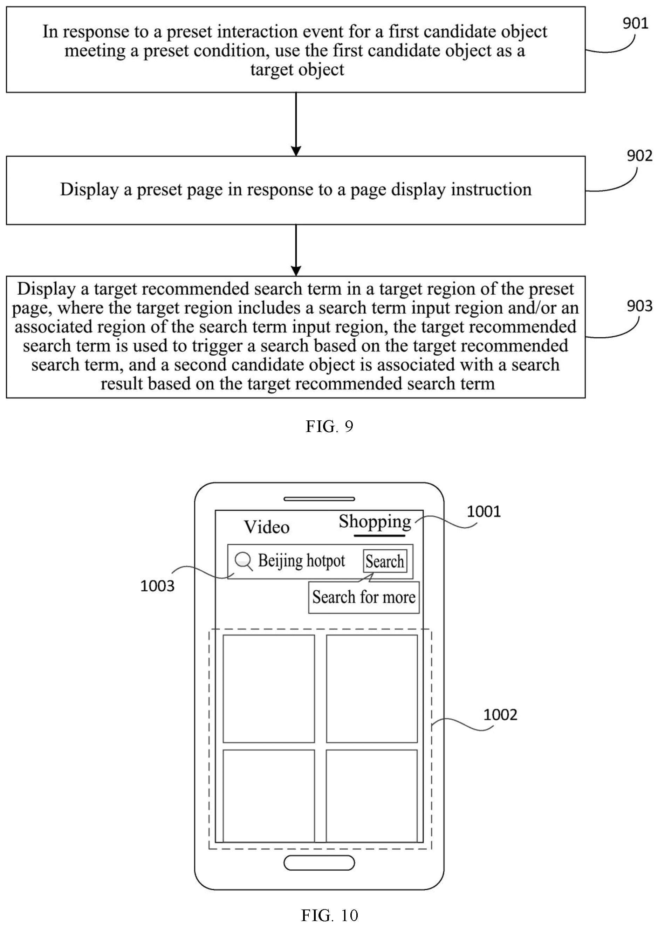

FIG. 9 is a schematic flowchart of still another information display method according to an embodiment of the present disclosure. This embodiment of the present disclosure is optimized based on optional solutions in the above-mentioned embodiments. Specifically, the method includes the following steps.

Step 901: In response to a preset interaction event for a first candidate object meeting a preset condition, the first candidate object is used as a target object.

Optionally, the preset interaction event for the first candidate object meeting the preset condition includes: the preset interaction event for the first candidate object being triggered by a search result based on a target search term input by a user.

For example, the user can make an active search by inputting the target search term, triggering a search operation, etc. After the search is completed, the user may select, from a set of displayed search results, a satisfactory search result, which is denoted as a target search result, and trigger the preset interaction event for the first candidate object by triggering an interaction link as the target search result or viewing media content in the target search result. After the preset interaction event for the first candidate object is triggered, an event-associated page may also be displayed, which is not specifically limited.

Step 902: A preset page is displayed in response to a page display instruction.

Step 903: Display a target recommended search term in a target region of the preset page, where the target region includes a search term input region and/or an associated region of the search term input region, the target recommended search term is configured to trigger a search based on the target recommended search term, and a second candidate object is associated with a search result based on the target recommended search term.

FIG. 10 is a schematic diagram of an interface according to an embodiment of the present disclosure. As shown in FIG. 10, a preset feed 1002 is displayed on a preset page 1001.

For example, the search term input region may be a region on the preset page that is used for the user to trigger input of a search term and display the search term, such as a search box. The associated region of the search term input region may be a region close to the position of the search term input region. For example, the distance between a display position of the associated region of the search term input region and a display position of the search term input region is less than a preset distance threshold. For example, for the target recommended search term displayed in the search term input region, a search based on the target recommended search term may be triggered by triggering a search control. For the target recommended search term displayed in the associated region of the search term input region, a search based on the target recommended search term may be triggered by triggering the target recommended search term.

For example, assuming that the user wants to eat roast duck, the user may make an active search by inputting "roast duck" (a target search term), triggering a search operation, etc. After the search is completed, the user may select, from a set of displayed search results, a satisfactory restaurant, such as a store selling Beijing roast duck, and purchase a meal voucher from the restaurant. Upon entry into the preset page, the target recommended search term is displayed, while the preset feed is displayed on the preset page. The target recommended search term is, for example, "Beijing hotpot", "Nanjing roast duck", or "Donkey meat burger".

As shown in FIG. 10, the target region includes a search term input region 1003, and the search term input region 1003 is automatically filled in with "Beijing hotpot". Optionally, trigger prompt information is further displayed in association with the search term input region 1003, such as "Search for more" in FIG. 10, to enhance the prompt effect of the target recommended search term. If the user wants to continue searching and "Beijing hotpot" meets the user's search need, the user can tap the search control for quick search, without actively inputting a search term, thereby reducing manual input, improving operational convenience, and improving the efficiency of triggering the preset interaction event.

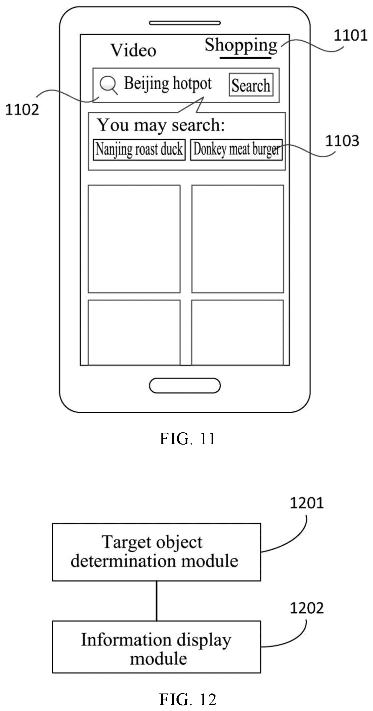

FIG. 11 is a schematic diagram of still another interface according to an embodiment of the present disclosure. As shown in FIG. 11, a target region on a preset page 1101 includes a search term input region 1102 and also an associated region 1103 of the search term input region. Different target recommended search terms are displayed separately in the two target regions. If "Beijing hotpot" in the search term input region 1102 does not meet the user's search need but "Nanjing roast duck" in the associated region 1103 of the search term input region meets the user's search need, the user may trigger a search based on "Nanjing roast duck" by triggering the target recommended search term, thereby improving the hit rate of the target recommended search term, reducing the user's manual input, improving operational convenience, and improving the efficiency of triggering the preset interaction event.

FIG. 12 is a schematic structural diagram of an information display apparatus according to an embodiment of the present disclosure. As shown in FIG. 12, the apparatus includes:
a target object determination module 1201 configured to, in response to a preset interaction event for a first candidate object meeting a preset condition, use the first candidate object as a target object; and
an information display module 1202 configured to display a preset page in response to a page display instruction, where target recommendation information is displayed on the preset page, the target recommendation information is determined based on attribute information of the target object, the target recommendation information is configured to trigger a preset interaction event for a second candidate object, and the second candidate object is associated with the target object.

In the information display apparatus according to this embodiment of the present disclosure, if the preset interaction event for the first candidate object meets the preset condition, during the display of the preset page, the target recommendation information that is determined based on the attribute information of the first candidate object used as the target object and that is configured to trigger the preset interaction event for the second candidate object associated with the target object is displayed on the preset page, which facilitates the user in triggering the preset interaction event for the second candidate object based on the target recommendation information, thereby improving the efficiency of triggering the preset interaction event.

Optionally, the attribute information of the target object includes a category of the target object. The second candidate object being associated with the target object includes: a similarity between a category of the second candidate object and the category of the target object meeting a preset similarity requirement, and/or a preset association relationship existing between the category of the second candidate object and the category of the target object, where the preset association relationship is determined based on historical interaction events.

Optionally, the attribute information of the target object includes target media content associated with the target object. The preset interaction event for the first candidate object meeting the preset condition includes: the preset interaction event for the first candidate object being triggered based on the target media content, where the target media content is associated with the first candidate object; and where the target recommendation information includes target media information of the target media content. The second candidate object being associated with the target object includes: the target media content being associated with the second candidate object.

Optionally, object recommendation information is further displayed on the preset page, and the target media information and the object recommendation information are displayed in a preset region of the preset page, where a display position of the target media information in the preset region is a preset display position.

The apparatus further includes:
a first display module configured to display the target media information in a first preset display style on the preset page; and
a second display module configured to display the object recommendation information in a second preset display style on the preset page, where the second preset display style is different from the first preset display style; and where the second preset display style being different from the first preset display style includes at least one of the following:
   no semi-transparent layer being overlaid on target information displayed in the first preset display style, while a semi-transparent layer being overlaid on target information displayed in the second preset display style;
   a display size of the target information displayed in the first preset display style being greater than a display size of the target information displayed in the second preset display style; and
   the target information displayed in the first preset display style containing an object identifier of the second candidate object, while the target information displayed in the second preset display style containing no object identifier of the second candidate object, where the object identifier is configured to trigger display of an object details page of the second candidate object to which the object identifier belongs; and
   the target information is the object recommendation information or the target media information.

Optionally, the apparatus further includes:
a first switching module configured to, in response to a first preset switching condition being met, switch from displaying the target media information in the first preset display style on the preset page to displaying the target media information in the second display style on the preset page; and/or
a second switching module configured to, in response to a second preset switching condition being met, switch from displaying the object recommendation information in the second preset display style on the preset page to displaying the object recommendation information in the first display style on the preset page.

Optionally, the target media content includes the live stream of the target live streaming room. The apparatus further includes:
a third display module configured to display the target media information in a preset display region of the preset page, where the preset display region includes a first display region and a second display region, the first display region is configured to display a preview live stream of the target live streaming room, and the second display region is configured to display an object identifier of the second candidate object associated with the live stream of the target live streaming room and/or an object identifier of a third candidate object associated with the live stream of the target live streaming room, where the second candidate object is a candidate object that is being demonstrated in the target live streaming room, and the third candidate object is a candidate object different from the second candidate object in a set of candidate objects associated with the target live streaming room.

Optionally, the target media content includes the live stream of the target live streaming room. The apparatus further includes:
an event-associated page display module configured to display an event-associated page of the preset interaction event before the preset page is displayed in response to the page display instruction;
a component display module configured to display a preset interaction component on the event-associated page; and
a component content display module configured to display in the preset interaction component the preview live stream of the target live streaming room and/or the object identifier of the second candidate object associated with the live stream of the target live streaming room, where the preview live stream is configured to trigger entry into a live streaming page of the target live streaming room, and the object identifier is configured to trigger display of the object details page of the candidate object to which the object identifier belongs.

Optionally, the component content display module includes:
a first display unit configured to display in the preset interaction component the preview live stream of the target live streaming room and the object identifier of the second candidate object associated with the live stream of the target live streaming room; and
a second display unit configured to, in response to a preset operation, switch from displaying the preview live stream of the target live streaming room and the object identifier of the second candidate object associated with the live stream of the target live streaming room in the preset interaction component to displaying the preview live stream of the target live streaming room in the preset interaction component.

Optionally, the target recommendation information includes a target recommended search term. The apparatus further includes:
a recommended search term display module configured to display the target recommended search term in a target region of the preset page, where the target region includes a search term input region and/or an associated region of the search term input region, the target recommended search term is configured to trigger a search based on the target recommended search term, and the second candidate object is associated with a search result based on the target recommended search term.

Optionally, the preset interaction event for the first candidate object meeting the preset condition includes: the preset interaction event for the first candidate object being triggered by a search result based on a target search term input by a user.

The information display apparatus according to this embodiment of the present disclosure can perform the information display method according to any one of the embodiments of the present disclosure, and has corresponding functional modules and beneficial effects for performing the method.

It is worth noting that the units and modules included in the apparatus described above are obtained through division merely according to functional logic, but are not limited to the above-mentioned division, as long as corresponding functions can be implemented. In addition, specific names of the functional units are merely used for mutual distinguishing, and are not configured to limit the scope of protection of the embodiments of the present disclosure.

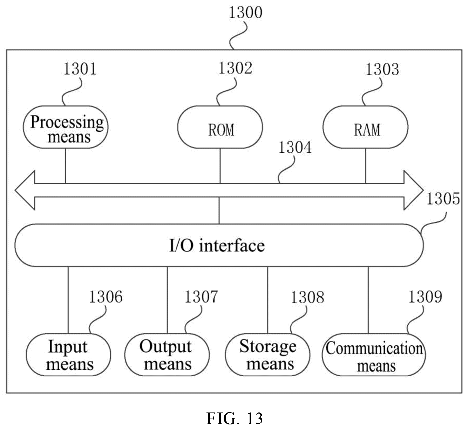

FIG. 13 is a schematic structural diagram of an electronic device according to an embodiment of the present disclosure. Reference is made to FIG. 13 below, which is a schematic structural diagram of an electronic device (such as a terminal device or a server in FIG. 13) 1300 suitable for implementing embodiments of the present disclosure. The terminal device in the embodiments of the present disclosure may include, but is not limited to, mobile terminals such as a mobile phone, a notebook computer, a digital broadcast receiver, a personal digital assistant (PDA), a PAD (tablet computer), a portable multimedia player (PMP), and a vehicle-mounted terminal (e.g., a vehicle navigation terminal), and fixed terminals such as a digital TV and a desktop computer. The electronic device shown in FIG. 13 is merely an example, and shall not impose any limitation on the function and scope of use of the embodiments of the present disclosure.

As shown in FIG. 13, the electronic device 1300 may include a processing means (for example, a central processing unit or a graphics processing unit) 1301 that may perform a variety of appropriate actions and processing in accordance with a program stored in a read-only memory (ROM) 1302 or a program loaded from a storage means 1308 into a random access memory (RAM) 1303. The RAM 1303 further stores various programs and data required for the operation of the electronic device 1300. The processing means 1301, the ROM 1302, and the RAM 1303 are connected to one another through a bus 1304. An input/output (I/O) interface 1305 is also connected to the bus 1304.

Generally, the following apparatuses may be connected to the I/O interface 1305: an input means 1306 including, for example, a touchscreen, a touchpad, a keyboard, a mouse, a camera, a microphone, an accelerometer, and a gyroscope; an output means 1307 including, for example, a liquid crystal display (LCD), a speaker, and a vibrator; the storage means 1308 including, for example, a magnetic tape and a hard disk drive; and a communication means 1309. The communication means 1309 may allow the electronic device 1300 to perform wireless or wired communication with other devices to exchange data. Although FIG. 13 shows the electronic device 1300 having various means, it should be understood that it is not required to implement or have all of the shown means. It may be an alternative to implement or have more or fewer means.

In particular, according to the embodiments of the present disclosure, the process described above with reference to the flowchart may be implemented as a computer software program. For example, an embodiment of the present disclosure includes a computer program product, which includes a computer program carried on a non-transitory computer-readable medium, where the computer program includes program code for performing the method shown in the flowchart. In such an embodiment, the computer program may be downloaded and installed from a network through the communication means 1309, installed from the storage means 1308, or installed from the ROM 1302. When the computer program is executed by the processing means 1301, the above-mentioned functions defined in the method according to the embodiments of the present disclosure are performed.

The names of messages or information exchanged between a plurality of apparatuses in the implementations of the present disclosure are used for illustrative purposes only, and are not configured to limit the scope of these messages or information.

The electronic device according to this embodiment of the present disclosure and the information display method according to the above-mentioned embodiments belong to the same inventive concept. For the technical details not exhaustively described in this embodiment, reference may be made to the above-mentioned embodiments, and this embodiment and the above-mentioned embodiments have the same beneficial effects.

An embodiment of the present disclosure provides a computer storage medium storing a computer program thereon, where the program, when executed by a processor, causes the information display method according to the above-mentioned embodiments to be implemented.

An embodiment of the present disclosure provides a computer program product. The computer program product includes a computer program that, when executed by a processor, causes the information display method according to the above-mentioned embodiments to be implemented.

It should be noted that the above-mentioned computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk drive, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), and the like, or any suitable combination thereof.

In some implementations, a client and a server may communicate using any currently known or future-developed network protocol such as the Hypertext Transfer Protocol (HTTP), and may be connected to digital data communication (for example, a communication network) in any form or medium. Examples of the communication network include a local area network ("LAN"), a wide area network ("WAN"), an internetwork (for example, the Internet), a peer-to-peer network (for example, an ad hoc peer-to-peer network), and any currently known or future-developed network.

The above-mentioned computer-readable medium may be included in the above-mentioned electronic device. Alternatively, the computer-readable medium may exist independently, without being assembled into the electronic device.

The computer-readable medium carries one or more programs that, when executed by the electronic device, cause the electronic device to: in response to a preset interaction event for a first candidate object meeting a preset condition, use the first candidate object as a target object; and display a preset page in response to a page display instruction, where target recommendation information is displayed on the preset page, the target recommendation information is determined based on attribute information of the target object, the target recommendation information is configured to trigger a preset interaction event for a second candidate object, and the second candidate object is associated with the target object.

Computer program code for performing operations of the present disclosure can be written in one or more programming languages or a combination thereof, where the programming languages include but are not limited to object-oriented programming languages, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user through any kind of network, including a local area network (LAN) or a wide area network (WAN), or may be connected to an external computer (for example, connected through the Internet with an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. The name of a module does not constitute a limitation on the module itself in some cases. For example, a target object determination module may also be described as "a module configured to, in response to a preset interaction event for a first candidate object meeting a preset condition, use the first candidate object as a target object".

The functions described herein above may be performed at least partially by one or more hardware logic components. For example, without limitation, example types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk drive, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

The above-mentioned descriptions are merely preferred embodiments of the present disclosure and explanations of the applied technical principles. Those skilled in the art should understand that the scope of disclosure involved in the present disclosure is not limited to the technical solutions formed by specific combinations of the above-mentioned technical features, and shall also cover other technical solutions formed by any combination of the above-mentioned technical features or equivalent features thereof without departing from the above-mentioned disclosed concept. For example, a technical solution formed by a replacement of the above-mentioned features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the above-mentioned discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely example forms of implementing the claims.

## Claims

1. An information display method, comprising:
in response to a preset interaction event for a first candidate object meeting a preset condition, using the first candidate object as a target object; and
displaying a preset page in response to a page display instruction, wherein target recommendation information is displayed on the preset page, the target recommendation information is determined based on attribute information of the target object, the target recommendation information is configured to trigger a preset interaction event for a second candidate object, and the second candidate object is associated with the target object.

2. The method according to claim 1, wherein the attribute information of the target object comprises a category of the target object; and
wherein the second candidate object being associated with the target object, comprises: a similarity between a category of the second candidate object and the category of the target object meeting a preset similarity requirement, and/or a preset association relationship existing between the category of the second candidate object and the category of the target object, wherein the preset association relationship is determined based on historical interaction events.

3. The method according to claim 1, wherein the attribute information of the target object comprises target media content associated with the target object;
wherein the preset interaction event for the first candidate object meeting the preset condition, comprises: the preset interaction event for the first candidate object being triggered based on the target media content, wherein the target media content is associated with the first candidate object;
wherein the target recommendation information comprises target media information of the target media content; and
wherein the second candidate object is associated with the target object, comprises: the target media content being associated with the second candidate object.

4. The method according to claim 3, wherein object recommendation information is further displayed on the preset page, and the target media information and the object recommendation information are displayed in a preset region of the preset page, wherein a display position of the target media information in the preset region is a preset display position; and
the method further comprises:
displaying the target media information in a first preset display style on the preset page;
displaying the object recommendation information in a second preset display style on the preset page, wherein the second preset display style is different from the first preset display style,
wherein the second preset display style being different from the first preset display style comprises at least one of:
no semi-transparent layer being overlaid on target information displayed in the first preset display style, while a semi-transparent layer being overlaid on target information displayed in the second preset display style;
a display size of the target information displayed in the first preset display style being greater than a display size of the target information displayed in the second preset display style; and
the target information displayed in the first preset display style containing an object identifier of the second candidate object, while the target information displayed in the second preset display style containing no object identifier of the second candidate object, wherein the object identifier is configured to trigger display of an object details page of the second candidate object to which the object identifier belongs; and
wherein the target information is the object recommendation information or the target media information.

5. The method according to claim 4, further comprising:
in response to a first preset switching condition being met, switching from displaying the target media information in the first preset display style on the preset page to displaying the target media information in the second preset display style on the preset page; and/or
in response to a second preset switching condition being met, switching from displaying the object recommendation information in the second preset display style on the preset page to displaying the object recommendation information in the first preset display style on the preset page.

6. The method according to claim 3, wherein the target media content comprises a live stream of a target live streaming room; and
the method further comprises:
displaying the target media information in a preset display region of the preset page, wherein the preset display region comprises a first display region and a second display region, the first display region is configured to display a preview live stream of the target live streaming room, and the second display region is configured to display an object identifier of the second candidate object associated with the live stream of the target live streaming room and/or an object identifier of a third candidate object associated with the target live streaming room, wherein the second candidate object is a candidate object that is being demonstrated in the target live streaming room, and the third candidate object is a candidate object different from the second candidate object in a set of candidate objects associated with the target live streaming room.

7. The method according to any one of claims 3 to 6, wherein the target media content comprises live stream of the target live streaming room; and
before displaying the preset page in response to the page display instruction, the method comprises:
displaying an event-associated page of the preset interaction event;
displaying a preset interaction component on the event-associated page; and
displaying in the preset interaction component a preview live stream of the target live streaming room and/or an object identifier of the second candidate object associated with the live stream of the target live streaming room, wherein the preview live stream is configured to trigger entry into a live streaming page of the target live streaming room, and the object identifier is configured to trigger display of an object details page of the candidate object to which the object identifier belongs.

8. The method according to claim 7, wherein displaying in the preset interaction component the preview live stream of the target live streaming room and/or the object identifier of the second candidate object associated with the live stream of the target live streaming room comprises:
displaying in the preset interaction component the preview live stream of the target live streaming room and the object identifier of the second candidate object associated with the live stream of the target live streaming room; and
in response to a preset operation, switching from displaying in the preset interaction component the preview live stream of the target live streaming room and the object identifier of the second candidate object associated with the live stream of the target live streaming room to displaying the preview live stream of the target live streaming room in the preset interaction component.

9. The method according to claim 1, wherein the target recommendation information comprises a target recommended search term; and the method further comprises:
displaying the target recommended search term in a target region of the preset page, wherein the target region comprises a search term input region and/or an associated region of the search term input region, the target recommended search term is configured to trigger a search based on the target recommended search term, and the second candidate object is associated with a search result based on the target recommended search term.

10. The method according to claim 9, wherein the preset interaction event for the first candidate object meeting the preset condition, comprises:
the preset interaction event for the first candidate object being triggered by a search result based on a target search term input by a user.

11. An information display apparatus, comprising:
a target object determination module configured to, in response to a preset interaction event for a first candidate object meeting a preset condition, use the first candidate object as a target object; and
an information display module configured to display a preset page in response to a page display instruction, wherein target recommendation information is displayed on the preset page, the target recommendation information is determined based on attribute information of the target object, the target recommendation information is configured to trigger a preset interaction event for a second candidate object, and the second candidate object is associated with the target object.

12. An electronic device, comprising:
one or more processors; and
a storage means configured to store one or more programs, wherein
the one or more programs, when executed by the one or more processors, cause the one or more processors to implement the information display method according to any one of claims 1 to 10.

13. A storage medium comprising computer-executable instructions, wherein the computer-executable instructions, when executed by a computer processor, are configured to perform the information display method according to any one of claims 1 to 10.
